(19) Europäisches Patentamt / European Patent Office / Office européen des brevets

(11) **EP 1 783 326 B1**

(12) **FASCICULE DE BREVET EUROPEEN**

(45) Date de publication et mention de la délivrance du brevet:
**07.06.2017 Bulletin 2017/23**

(51) Int Cl.:
*F01D 9/04* (2006.01)     *F01D 9/06* (2006.01)
*F01D 5/18* (2006.01)

(21) Numéro de dépôt: **06123454.8**

(22) Date de dépôt: **03.11.2006**

(54) **Agencement de refroidissement d'une aube d'une turbine, aube de turbine le comportant, turbine et moteur d'aéronef en étant équipés**

Kühlungsanordnung in einer Turbinenschaufel, Turbinenschaufel, Turbine und Flugantrieb damit ausgestattet

Cooling arrangement for a gas turbine blade, gas turbine blade, turbine and gas turbine engine equipped with the same

(84) Etats contractants désignés:
**DE FR GB**

(30) Priorité: **07.11.2005 FR 0553357**

(43) Date de publication de la demande:
**09.05.2007 Bulletin 2007/19**

(73) Titulaire: **SNECMA**
**75015 Paris (FR)**

(72) Inventeurs:
- **Dervaux Alexandre**
  **75014 Paris (FR)**
- **Guimbard, Jean-Michel, Bernard**
  **77930 Cely En Biere (FR)**
- **Redon, Damien, Gilbert, André**
  **92130 Issy Les Moulineaux (FR)**
- **Papot, Pascal, Bertrand, Yves, Claude**
  **77820 Le Chatelet En Brie (FR)**

(74) Mandataire: **Ahner, Philippe et al**
**BREVALEX**
**95, rue d'Amsterdam**
**75378 Paris Cedex 8 (FR)**

(56) Documents cités:
**EP-A- 0 541 207     US-A- 5 695 321**
**US-A1- 2003 035 726**

- **DATABASE INSPEC [Online] THE INSTITUTION OF ELECTRICAL ENGINEERS, STEVENAGE, GB; 2003, SHOU-SHING HSIEH ET AL: "Impingement cooling in a rotating curved square annular duct with crossflow effect from rib-roughened surfaces" XP002395911 Database accession no. 7673232 & Heat and Mass Transfer Springer-Verlag Germany, vol. 39, no. 2, janvier 2003 (2003-01), pages 107-117, ISSN: 0947-7411**

## Description

## DOMAINE TECHNIQUE

La présente invention se rapporte au domaine technique du refroidissement des aubes d'une turbine d'une turbomachine, en particulier d'un moteur d'aéronef.

Plus spécifiquement, l'invention se rapporte au domaine technique du refroidissement d'une aube d'une turbine, par jets d'air de refroidissement projetés sur une paroi interne de l'aube, à travers une chemise disposée à l'intérieur de l'aube.

L'invention vise un agencement d'ailettes de refroidissement disposées sur la paroi interne de l'aube et de trous d'émission des jets d'air de refroidissement réalisés à travers la chemise.

Plus particulièrement, l'invention vise un agencement de la position relative des ailettes et des trous d'émission, afin d'améliorer le refroidissement de l'aube.

L'invention se rapporte également à une aube dotée d'un tel agencement de refroidissement, cette aube pouvant être une aube fixe de distributeur ou une roue mobile.

L'invention se rapporte aussi à une turbine comportant au moins un tel agencement de refroidissement et/ou une telle aube.

L'invention se rapporte enfin à un moteur d'aéronef équipé d'au moins un tel agencement de refroidissement et/ou une telle aube et/ou une telle turbine.

## ÉTAT DE LA TECHNIQUE ANTÉRIEURE

On connaît déjà des dispositifs de refroidissement des aubes d'un étage de turbine d'une turbomachine.

Les aubes sont refroidies par convection forcée d'air de refroidissement circulant à travers une cavité formée dans les aubes. De l'air de refroidissement est prélevé dans une partie plus froide de la turbomachine, par exemple dans le compresseur. Cet air de refroidissement est amené dans chaque aube par l'une des extrémités de celle-ci, par exemple son extrémité radialement externe. Cet air de refroidissement circule dans l'aube et s'écoule par l'extrémité opposée, par exemple son extrémité radialement interne. Quelquefois, l'air de refroidissement est amené dans l'aube par ses deux extrémités.

Lorsque les aubes sont dotées d'une chemise disposée dans la cavité de l'aube correspondante, l'air de refroidissement peut aussi circuler de l'intérieur de la chemise vers l'extérieur de celle-ci, à travers des trous d'émission réalisés à travers la chemise.

Cet air de refroidissement est projeté sur la paroi interne de la cavité de l'aube à travers les trous d'émission de la chemise, sous forme de jets, et arrive sur cette paroi en différents points d'impact.

Il est connu de disposer des ailettes de refroidissement sur la paroi interne de la cavité de l'aube, afin d'augmenter la surface d'échange thermique entre cette paroi interne et les jets d'air projetés, comme dans le document US 2003 035726. La présence de ces ailettes permet d'augmenter la surface d'échange thermique entre les jets d'air de refroidissement et la paroi interne de l'aube.

Dans les dispositifs de refroidissement de la technique antérieure qui sont décrits ci-dessus, la qualité de refroidissement des aubes résulte de la surface d'échange thermique entre la paroi interne des aubes et les jets d'air de refroidissement qui sont projetés sur cette paroi interne, c'est-à-dire du nombre et de la dimension des ailettes disposées sur la paroi interne de chaque aube.

Dans ces dispositifs de refroidissement de la technique antérieure qui sont décrits ci-dessus, la position d'arrivée des jets d'air de refroidissement par rapport à la position des ailettes est aléatoire. Il en résulte que le refroidissement de l'aube correspondante n'est pas homogène sur la zone considérée. Par suite, lors des phases les plus pénalisantes en termes de tenue thermomécanique des pièces et notamment pour le point de fonctionnement critique de la turbomachine, le caractère aléatoire de la position des ailettes par rapport à la position des impacts d'air de refroidissement peut conduire à une usure prématurée du distributeur ou de la roue mobile de la turbine.

## EXPOSÉ DE L'INVENTION

La présente invention propose une amélioration des dispositifs de refroidissement des aubes fixes ou mobiles d'une turbine d'une turbomachine, par jets d'air de refroidissement, chaque aube étant dotée d'au moins une cavité et d'au moins une chemise disposée à l'intérieur de cette cavité. Le refroidissement se produit par jets d'air de refroidissement projetés sur la paroi interne de l'aube à travers des trous d'émission réalisés dans la chemise. Des ailettes de refroidissement sont présentes sur la paroi interne de l'aube, dans une zone de celle-ci qui est en regard des jets d'air de refroidissement et sur laquelle se situent les points d'impact de ces jets d'air de refroidissement.

Selon l'invention, il est proposé un agencement particulier des ailettes de refroidissement par rapport aux trous d'émission réalisés dans la chemise, qui permet de surmonter l'inconvénient mentionné ci-dessus des dispositifs de refroidissement de la technique antérieure.

Selon un premier aspect, l'invention se rapporte à un agencement de refroidissement d'une aube d'une turbine d'une turbomachine,
ladite aube étant dotée d'au moins une cavité entourée par une paroi interne comportant des ailettes de refroidissement qui sont espacées les unes des autres d'un pas p et ont chacune une épaisseur e,
ladite aube étant dotée d'une chemise, disposée à l'intérieur de ladite cavité et traversée par des trous d'émission ayant chacun un diamètre d,

ledit agencement de refroidissement étant caractérisé en ce que, lorsque la chemise est en place dans la cavité de l'aube, et pour le point de fonctionnement critique de la turbomachine, chaque trou d'émission de la chemise se trouve en regard d'un emplacement de la paroi interne de l'aube qui se situe entre des ailettes de refroidissement.

En particulier, lorsque la chemise est en place dans la cavité de l'aube, et pour le point de fonctionnement critique de la turbomachine, le pas p et l'épaisseur e des ailettes de refroidissement satisfont à la relation :

$$(1) \quad p/e \geq 3.$$

En particulier, lorsque la chemise est en place dans la cavité de l'aube, et pour le point de fonctionnement critique de la turbomachine, au moins un emplacement de la paroi interne de l'aube qui se situe entre des ailettes de refroidissement se trouve en regard d'au moins un trou de la chemise.

En d'autres termes, lorsque la chemise est en place dans la cavité de l'aube, et pour le point de fonctionnement critique de la turbomachine, aucune ailette de la paroi interne de l'aube ne se trouve en regard d'un trou de la chemise.

Selon un deuxième aspect, l'invention se rapporte à une aube d'une turbine de turbomachine, comportant un agencement de refroidissement selon le premier aspect de l'invention.

Selon un troisième aspect, l'invention se rapporte à une turbine d'une turbomachine, comportant au moins une aube selon le deuxième aspect de l'invention.

Selon un quatrième aspect, l'invention se rapporte à un moteur d'aéronef, comportant au moins une aube de turbine selon le deuxième aspect de l'invention.

Avec l'agencement de refroidissement selon l'invention, on obtient un refroidissement des aubes de turbine qui est plus homogène qu'avec les agencements de refroidissement de la technique antérieure qui ont été discutés précédemment. Par suite, la durée de vie de la turbine est augmentée.

Avec l'agencement de refroidissement selon l'invention, on obtient un refroidissement des aubes de turbine qui est plus efficace qu'avec les agencements de refroidissement de la technique antérieure qui ont été discutés précédemment.

Selon une réalisation particulière du moteur d'aéronef selon le cinquième aspect de l'invention, ledit moteur d'aéronef comportant un agencement de refroidissement d'une aube d'une turbine selon le premier aspect, est caractérisé en ce qu'il comporte un dispositif de prélèvement d'air de refroidissement qui amène de l'air de refroidissement jusqu'à l'intérieur d'une chemise disposée dans une cavité d'au moins une aube selon le premier aspect, ledit air de refroidissement étant ensuite projeté sur la paroi interne de l'aube à travers les trous d'émission réalisés dans ladite chemise sous la forme d'un écoulement de refroidissement qui a un nombre de Reynolds $R_e$ ayant pour longueur caractéristique le diamètre d des trous d'émission, et satisfaisant à la relation :

$$(2) \quad R_e < 10000.$$

Selon une réalisation encore plus particulière du moteur d'aéronef selon le cinquième aspect de l'invention, ledit moteur d'aéronef comportant un agencement de refroidissement d'une aube d'une turbine, ladite aube étant dotée d'au moins une cavité entourée par une paroi interne comportant des ailettes de refroidissement qui sont espacées les unes des autres d'un pas p et ont chacune une épaisseur e, ladite aube étant dotée d'une chemise, disposée à l'intérieur de ladite cavité et traversée par des trous d'émission ayant chacun un diamètre d, ledit moteur d'aéronef comportant en outre un dispositif de prélèvement d'air de refroidissement qui amène de l'air de refroidissement jusqu'à l'intérieur de la chemise, ledit air de refroidissement étant ensuite projeté sur la paroi interne de l'aube à travers les trous d'émission réalisés dans ladite chemise, sous la forme d'un écoulement de refroidissement qui a un nombre de Reynolds $R_e$ ayant pour longueur caractéristique le diamètre d des trous d'émission, est caractérisé en ce que, lorsque la chemise est en place dans la cavité de l'aube, et pour le point de fonctionnement critique de la turbomachine, chaque trou d'émission de la chemise se trouve en regard d'un emplacement de la paroi interne de l'aube qui se situe entre des ailettes de refroidissement, et en ce que le pas p, l'épaisseur e, et le nombre de Reynolds $R_e$ satisfont aux relations :

$$p/e \geq 3,$$

et

$$R_e < 10000.$$

Il a été observé qu'avec un agencement de refroidissement selon l'invention, le refroidissement des aubes de la turbine est optimisé lors des phases de fonctionnement les plus pénalisantes en terme de tenue thermomécanique des pièces.

En particulier, pour le point de fonctionnement critique de la turbomachine, il a été observé que le coefficient moyen d'échange thermique entre l'écoulement de refroidissement et les ailettes de refroidissement est augmenté de 10% par rapport aux coefficients d'échange thermique rencontré avec les dispositifs de refroidissement de la technique antérieure.

## BRÈVE DESCRIPTION DES DESSINS

L'invention sera mieux comprise à la lecture de la description détaillée qui va suivre de modes de réalisation de l'invention, donnés à titre illustratif et nullement limitatif, en référence aux dessins annexés, dans lesquels :

- la figure 1 représente, en coupe longitudinale, une aube de distributeur, montrant la chemise disposée à l'intérieur de la cavité et les trous d'émission réalisés sur cette chemise ;
- la figure 2 représente la même aube de distributeur, en coupe transversale à travers la ligne II-II de la figure 1 ;
- la figure 3 est un schéma illustrant, en en coupe longitudinale, la position relative des ailettes de la paroi interne de l'aube et des trous d'émission réalisés à travers la chemise ;
- la figure 4 est une vue en perspective d'une ailette de la paroi interne de l'aube.

## EXPOSÉ DÉTAILLÉ DE MODES DE RÉALISATION PARTICULIERS

Il est brièvement rappelé qu'une turbine est composée d'une succession d'étages comportant chacun un distributeur et une roue mobile, le distributeur étant une grille d'aubes fixes qui redressent un flux d'air passant par la veine de la turbomachine, et la roue mobile portant des aubes mobiles.

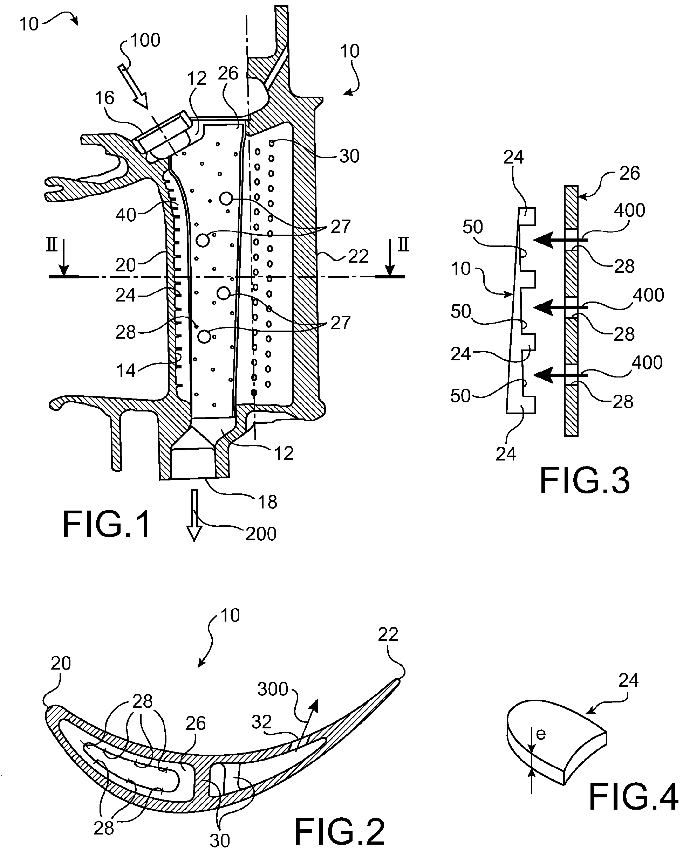

En se référant tout d'abord aux figures 1 et 2, il est représenté une aube 10 d'un distributeur d'une turbine d'une turbomachine.

L'aube 10 est dotée d'une cavité 12 et d'une paroi interne 14 entourant la cavité 12. L'aube 10 comporte une première extrémité 16 et une deuxième extrémité 18, qui, sur l'exemple illustré à la figure 1, sont ses extrémités radialement extérieure et radialement intérieure. Les deux extrémités 16, 18 sont ouvertes et communiquent avec la cavité 12 de l'aube 10.

L'aube 10 comporte un bord d'attaque 20 et un bord de fuite 22.

Sur sa paroi interne 14, l'aube 10 est munie d'ailettes de refroidissement 24, qui sont notamment disposées vers le bord d'attaque 20. Comme illustré à la figure 4, les ailettes de refroidissement 24 se présentent sensiblement sous la forme d'une pièce découpée dans une plaque et ayant un profil arrondi. Ces ailettes de refroidissement 24 sont caractérisées par les dimensions suivantes :

- une épaisseur e (voir figure 4), et
- un pas p, qui correspond à une distance moyenne entre deux ailettes de refroidissement voisines.

Dans la cavité 12 est disposée une chemise 26, qui se présente sous la forme d'une tôle préformée et soudée, ayant une forme sensiblement conique. Les extrémités de la chemise reposent sur la paroi interne 14. Le corps de la chemise 26, situé entre les extrémités de celle-ci, n'est pas en contact avec la paroi interne 14. Il y a, notamment vers le bord d'attaque 20 de l'aube 10, un intervalle 40 entre la chemise 26 et la paroi interne 14. Seuls quelques bossages 27 à la surface de la chemise 26 sont en contact avec la paroi interne 14 et permettent le positionnement et le maintien de la chemise 26 dans la cavité 12.

La chemise 26 est munie de trous d'émission 28, qui sont réalisés par perçage à travers l'épaisseur de la chemise 26. Ces trous d'émission 28 sont caractérisés par un diamètre d.

Sur l'exemple illustré aux figures 1 et 2, l'aube 10 comporte également des pontets 30 qui traversent la cavité 14 suivant une direction transversale de celle-ci et des orifices traversant 32 disposés vers son bord de fuite 22. Les pontets 30 et les orifices traversants 32 ne jouent aucun rôle dans le cadre de la présente invention.

Lors du fonctionnement de la turbomachine, il est connu de refroidir les aubes 10 du distributeur de la turbine en prélevant de l'air de refroidissement dans une partie plus froide de la turbomachine, par exemple un compresseur, et en introduisant cet air de refroidissement dans la cavité 12 de chaque aube 10.

Sur la figure 1, la flèche 100 représente un flux d'air de refroidissement introduit dans la chemise 26 disposée dans la cavité 12 par la première extrémité 16, et la flèche 200 représente une partie de ce flux d'air de refroidissement qui s'échappe de la chemise 26 par la deuxième extrémité 18. Ce flux d'air qui traverse la chemise 26 permet d'alimenter en air de refroidissement d'autres parties du moteur.

Une partie important de ce flux d'air de refroidissement pénètre dans la chemise 26 à partir de la première extrémité 16, et s'en échappe vers la paroi interne 14 de l'aube 10 par les trous d'émission 28 ménagés à travers la chemise 26, sous la forme d'écoulements transversaux. Ces écoulements transversaux sont représentés sur la figure 3 par les flèches 400.

L'air de refroidissement s'évacue à travers les trous d'émission 28 sous la forme de jets d'air qui sont projetés sur la paroi interne 14 en des points d'impact 50 de celle-ci.

Lorsque la chemise 26 est en place dans la cavité 12, et pour des conditions de fonctionnement les plus pénalisantes d'un point de vue thermomécanique de la turbomachine, les ailettes de refroidissement 24 et les trous d'émission 28 sont agencés, respectivement sur la paroi interne 14 de l'aube 10 et sur la chemise 26 disposée dans l'aube 10, de telle façon que les points d'impact 50 des jets d'air de refroidissement se situent entre les ailettes de refroidissement 24, comme le montre la figure 3. En d'autres termes, au point de fonctionnement critique, les jets d'air de refroidissement n'arrivent pas sur des ailettes de refroidissement 24, mais entre des ailettes de refroidissement 24. Il peut arriver un seul jet d'air de refroidissement ou plusieurs jets d'air de refroidissement dans un emplacement situé entre des ailettes de refroidissement 24. Les conditions de fonctionnement les plus pénalisantes d'un point de vue thermomécanique de la turbomachine, et notamment son point de fonctionnement critique, sont bien connues de l'homme du métier. Elles correspondent à des températures élevées comprises entre 700°C et 1100°C, pour lesquelles les caractéristiques mécaniques de matériaux sont altérées. C'est dans ces conditions de fonctionnement les plus pénalisantes que le refroidissement de l'aube 10 doit être le plus efficace.

Il a été observé que le positionnement relatif des ailettes de refroidissement sur la paroi interne 14 de l'aube 10 et des trous d'émission 28 à travers la chemise 26 est optimisé lorsque sont satisfaites les relations suivantes :

$$p/e \geq 3$$

et

$$R_e < 10000,$$

où p représente la distance moyenne entre deux ailettes de refroidissement 24 voisines, e représente l'épaisseur moyenne des ailettes de refroidissement 24, d représente le diamètre des trous d'émission 28, et $R_e$ représente le nombre de Reynolds de l'écoulement d'air de refroidissement au niveau des trous d'émission 28.

La description détaillée qui précède est relative à des aubes d'un distributeur d'une turbine d'une turbomachine. Cependant, l'invention s'applique aussi aux aubes d'une roue mobile d'une turbine d'une turbomachine.

Exemple de réalisation :

L'aube est réalisée en superalliage. La chemise est réalisée en alliage résistant à chaud.

Pour un écoulement d'air de refroidissement au niveau des trous d'émission traversant la chemise et ayant un nombre de Reynolds $R_e = 50000$, les dimensions suivantes, correspondant au point de fonctionnement critique, sont applicables :

$$p = 3,5 \text{ mm}$$

$$e = 0,5 \text{ mm}$$

$$d = 0,53 \text{ mm}$$

En pratique, on réalise un modèle par simulation numérique de la manière suivante :

- on conçoit un modèle « à chaud », c'est-à-dire au point de fonctionnement critique, en introduisant comme paramètres les températures souhaitées établies en fonction des matériaux utilisés, et en sélectionnant les valeurs p, e, d ci-dessus ;
- puis on passe du modèle « à chaud » à un modèle « à froid » en modifiant les paramètres de température,
- puis on relève les valeurs de p, e, d de ce modèle « à froid », qui correspondent aux cotes et aux positions relatives des ailettes et des trous d'émission des pièces fabriquées à froid.

La simulation numérique est effectuée sur un logiciel de C.A.O. (Conception Assistée par Ordinateur) possédant un module de mise sous conditions de température. L'exemple ci-dessus a été réalisé avec le module Scale Factor du logiciel de C.A.O. Catia.

**Revendications**

1. Agencement de refroidissement d'une aube (10) d'un distributeur d'une turbomachine, ladite aube (10) étant dotée d'au moins une cavité (12) entourée par une paroi interne (14) comportant des ailettes de refroidissement (24) qui sont espacées les unes des autres d'un pas (p) et ont chacune une épaisseur (e), ladite aube (10) étant dotée d'une chemise (26), et traversée par des trous d'émission (28) ayant chacun un diamètre et lorsque la chemise (26) est en place dans la cavité (12) de l'aube (10), et pour le point de fonctionnement critique de la turbomachine, chaque trou d'émission (28) de la chemise (26) se trouve en regard d'un emplacement de la paroi interne (14) de l'aube (10) qui se situe entre des ailettes de refroidissement (24) et en ce que, lorsque la chemise (26) est en place dans la cavité (12) de l'aube (10), et pour le point de fonctionnement critique de la turbomachine, le pas (p) et l'épaisseur (e) des ailettes de refroidissement (24) satisfont à la relation :

$$(1) \ p/e >= 3.$$

**caractérisé en ce que** la chemise (26) n'est pas en contact avec les ailettes de refroidissement et est en contact avec la paroi interne (14) par l'intermédiaire de bossages (27) situés à la surface de la chemise.

**2.** Agencement de refroidissement selon la revendication 1, **caractérisé en ce que**, lorsque la chemise (26) est en place dans la cavité (12) de l'aube (10), et pour le point de fonctionnement critique de la turbomachine, au moins un emplacement de la paroi interne (14) de l'aube (10) qui se situe entre des ailettes de refroidissement (24) se trouve en regard d'au moins un trou d'émission (28) de la chemise (26).

**3.** Agencement de refroidissement selon l'une quelconque des revendications 1 à 2, **caractérisé en ce que**, pour le point de fonctionnement critique de la turbomachine, aucune ailette de refroidissement (24) de la paroi interne (14) de l'aube (10) ne se trouve en regard d'un trou d'émission (28) de la chemise (26).

**4.** Aube (10) d'une turbine de turbomachine, **caractérisée en ce qu'**elle comporte un agencement de refroidissement selon la revendication 1 à 3.

**5.** Turbine d'une turbomachine, **caractérisée en ce qu'**elle comporte au moins une aube (10) selon la revendication 4.

**6.** Moteur d'aéronef, **caractérisé en ce qu'**il comporte au moins une aube (10) selon la revendication 4.

**7.** Moteur d'aéronef, **caractérisé en ce qu'**il comporte un dispositif de prélèvement d'air de refroidissement qui amène de l'air de refroidissement jusqu'à l'intérieur d'une chemise (26) disposée dans une cavité (12) d'au moins une aube (10) selon la revendication 4, ledit air de refroidissement étant ensuite projeté sur la paroi interne (14) de l'aube (10) à travers des trous d'émission (28) réalisés dans ladite chemise (26) sous la forme d'un écoulement de refroidissement qui a un nombre de Reynolds (Re) ayant pour longueur caractéristique le diamètre (d) des trous d'émission (28) et satisfaisant à la relation :

$$(2) \quad Re < 10000.$$

**Patentansprüche**

**1.** Anordnung zur Kühlung einer Schaufel (10) eines Leitrades einer Turbomaschine,
wobei die Schaufel (10) mit wenigstens einem Hohlraum (12) ausgestattet ist, der von einer Innenwandung (14) umgeben ist, welche Kühlrippen (24) aufweist, die um einen Abstand (p) voneinander beabstandet sind und jeweils eine Dicke (e) aufweisen,
wobei die Schaufel (10) mit einem Mantel (26) ausgestattet und von Ausströmungslöchern (28) durchquert ist, die jeweils einen Durchmesser aufweisen, und jedes Ausströmungsloch (28) des Mantels (26), wenn der Mantel (26) in dem Hohlraum (12) der Schaufel (10) angeordnet ist, sowie für den kritischen Betriebspunkt der Turbomaschine, sich gegenüber einer Stelle der Innenwandung (14) der Schaufel (10), die zwischen Kühlrippen (24) gelegen ist, befindet, und dass wenn der Mantel (26) in dem Hohlraum (12) der Schaufel (10) angeordnet ist, sowie für den kritischen Betriebspunkt der Turbomaschine, der Abstand (p) und die Dicke (e) der Kühlrippen (24) die Beziehung erfüllen:

$$(1) \quad p/e >= 3$$

**dadurch gekennzeichnet, dass** der Mantel (26) nicht mit den Kühlrippen in Kontakt ist und mit der Innenwandung (14) über Buckel (27), welche auf der Oberfläche des Mantels gelegen sind, in Kontakt ist.

**2.** Kühlungsanordnung nach Anspruch 1, **dadurch gekennzeichnet, dass** wenn der Mantel (26) in dem Hohlraum (12) der Schaufel (10) angeordnet ist, sowie für den kritischen Betriebspunkt der Turbomaschine, wenigstens eine Stelle der Innenwandung (14) der Schaufel (10), welche zwischen Kühlrippen (24) gelegen ist, sich gegenüber wenigstens einem Ausströmungsloch (28) des Mantels (26) befindet.

**3.** Kühlungsanordnung nach einem der Ansprüche 1 bis 2, **dadurch gekennzeichnet, dass** für den kritischen Betriebspunkt der Turbomaschine keine Kühlrippe (24) der Innenwandung (14) der Schaufel (10) sich gegenüber einem Ausströmungsloch (28) des Mantels (26) befindet.

**4.** Schaufel (10) einer Turbine einer Turbomaschine, **dadurch gekennzeichnet, dass** sie eine Kühlungsanordnung nach Anspruch 1 bis 3 umfasst.

**5.** Turbine einer Turbomaschine, **dadurch gekennzeichnet, dass** sie wenigstens eine Schaufel (10) nach Anspruch 4 umfasst.

**6.** Luftfahrzeugtriebwerk, **dadurch gekennzeichnet, dass** es wenigstens eine Schaufel (10) nach Anspruch 4 umfasst.

**7.** Luftfahrzeugtriebwerk, **dadurch gekennzeichnet, dass** es eine Vorrichtung zur Entnahme von Kühlluft umfasst, die Kühlluft bis zum Inneren eines Mantels (26), welcher in einem Hohlraum (12) wenigstens einer Schaufel (10) nach Anspruch 4 angeordnet ist, führt, wobei die Kühlluft anschließend auf die Innenwandung (14) der Schaufel (10) durch in dem Mantel (26) ausgebildete Ausströmungslöcher (28) in Form einer Kühlungsströmung ausgestoßen wird, die eine Reynolds-Zahl (Re) aufweist, welche als charakteristische Länge den Durchmesser (d) der Ausströmungslöcher (28) hat und die Beziehung erfüllt:

$$(2) \quad \mathrm{Re} < 10000.$$

## Claims

1. Cooling layout for a turbine engine distributor blade (10),
   said blade (10) being fitted with at least one cavity (12) surrounded by an internal wall (14) comprising cooling fins (24) which are spaced apart from each other by a pitch (p) and each have a thickness (e), said blade (10) being fitted with a jacket (26), and passed through by emission holes (28) each having a diameter (d), **characterised in that**, when the jacket (26) is in place in the cavity (12) of the blade (10), and in respect of the critical operating point of the turbine engine, each emission hole (28) of the jacket (26) is opposite a place on the internal wall (14) of the blade (10) which is between cooling fins (24) and when the jacket (26) is in place in the cavity (12) of the blade (10), and in respect of the critical operating point of the turbine engine, the pitch (p) and the thickness (e) of the cooling fins (24) satisfy the relationship:

$$(1) \quad p/e \geq 3,$$

   **characterized in that** the jacket (26) is not in contact with the cooling fins and is in contact with the internal wall (14) through lobes (27) located on the surface of the jacket.

2. Cooling layout according to claim 1, **characterised in that**, when the jacket (26) is in place in the cavity (12) of the blade (10), and in respect of the critical operating point of the turbine engine, at least one place on the internal wall (14) of the blade (10) which is between cooling fins (24) is opposite at least one emission hole (28) of the jacket (26).

3. Cooling layout according to any one of claims 1 to 2, **characterised in that**, in respect of the critical operating point of the turbine engine, no cooling fin (24) on the internal wall (14) of the blade (10) is opposite an emission hole (28) of the jacket (26).

4. Blade (10) of a turbine engine turbine, **characterised in that** it comprises a cooling layout according to claim 1 to 3.

5. Turbine engine turbine, **characterised in that** it comprises at least one blade (10) according to claim 4.

6. Aircraft engine, **characterised in that** it comprises at least one blade (10) according to claim 4.

7. Aircraft engine, **characterised in that** it comprises a cooling air bleeding device which brings cooling air into the inside of a jacket (26) arranged in a cavity (12) of at least one blade (10) according to claim 5, said cooling air being then blasted onto the internal wall (14) of the blade (10) through emission holes (28) made in said jacket (26) in the form of a cooling flow which has a Reynolds number ($R_e$) the characteristic length of which is the diameter (d) of the emission holes (28) and which satisfies the relationship:

$$(2) \quad Re < 10,000.$$

FIG.1

FIG.3

FIG.2

FIG.4

**EP 1 783 326 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2003035726 A